# EUROPEAN PATENT SPECIFICATION

(11) **EP 2 377 718 B1**
(45) Date of publication and mention of the grant of the patent: **03.12.2014**
(21) Application number: 11162864.0
(22) Date of filing: 18.04.2011
(51) Int. Cl.: B60N 2/28, A44B 11/25, B60R 22/10

(54) **Seatbelt fastener for child carrier apparatus**
Sitzgurtbefestiger für eine Kindertragvorrichtung
Fixation de ceinture de sécurité pour appareil pour porter un enfant

(30) Priority: 19.04.2010 CN 201010153086
(43) Date of publication of application: 19.10.2011
(73) Proprietor: Wonderland Nurserygoods Company Limited, Central Hong Kong (CN)
(72) Inventor: Cui, Zong Wang, Central Hong Kong (CN)
(74) Representative: Epping - Hermann - Fischer

(56) References cited:
- GB-A- 2 433 546
- JP-A- 8 089 314
- JP-A- 2006 122 171
- US-A- 5 604 964
- US-A1- 2005 132 545

## Description

### BACKGROUND OF THE INVENTION

### 1. Field of the Invention

The present invention relates to a seatbelt fastener system suitable for use with a child carrier apparatus.

### 2. Description of the Related Art

A seatbelt usually includes a fastener system that can attach multiple harness straps together (such as shoulder and waist straps) to restrain an occupant on a seat. The fastened occupant can be thereby protected against collision. Conventional design requirements for the fastener system includes convenient and easy to attach and detach features, and high resistance against shock and collision. However, fastener systems currently available, such as those used on child safety seats, may not meet all the manufacture requirements. In particular, many current fastener designs still require a large amount of component parts (such as springs, sliding elements, etc.), which increases the time for assembly and manufacture cost.

US 2005/132545 A1 describes a buckle with a push button release. A hook portion of a release tab of male portion can engage and lock with catches of female portion to fasten male and female portion. For unfastening male portion, push button is pushed in order to move release prongs upward in between release tabs and catches.

Therefore, there is a need for an improved design that can reduce the manufacturing cost and time for assembly, and address at least the foregoing issues.

### SUMMARY

The present application describes a seatbelt fastener system suitable for use with a child carrier apparatus. In one embodiment, a seatbelt fastener system comprisesa first fastener having a tongue and a socket,including a housing and a release button. The release button is affixed with the housing and has a resilient region, and the socket has an interior provided with a plurality of retainer portions. The tongue of the first fastener is operable to insert into the socket so that the retainer portions engage and lock with the tongue. Upon application of an external pressure on the resilient region, the resilient region of the release button deforms and drives displacement of the retainer portions such that the retainer portions disengage and unlock from the tongue.

At least one advantage of the seatbelt fastener system described herein is the ability to provide a system which requires a smaller amount of component parts. As a result, the time for assembly and manufacturing cost of the fastener system can be reduced.

### BRIEF DESCRIPTION OF THE DRAWINGS

Figure 1 is a perspective view illustrating one embodiment of a seatbelt fastener system;
Figure 2 is an exploded view of the seatbelt fastener system;
Figures 3 and 4 are schematic views illustrating the assembly and construction of a first fastener and second fastener used in the fastener system of Figure 1;
Figure 5 is a cross-sectional view of the fastener system taken along section 5-5 shown in Figure 1;
Figure 6 is a cross-sectional view of the fastener system taken along section 6-6 shown in Figure 1;
Figure 7 is a schematic view illustrating the first fasteners and a portion of the socket of the fastener system;
Figure 8 is a perspective view illustrating a release button used in a socket of the fastener system;
Figure 9 is a schematic view illustrating another embodiment of a fastener system;
Figures 10 and 11 are schematic views illustrating the assembly and construction of a first fastener and second fastener used in the fastener system of Figure 9; and
Figure 12 is a schematic view illustrating an embodiment of a child carrier apparatus including a fastener system.

### DETAILED DESCRIPTION OF THE EMBODIMENTS

The present application describes a seatbelt fastener system suitable for use with a child carrier apparatus. The seatbelt fastener system has a construction that requires less component parts, and can be manufactured in a cost-effective manner. The embodiments described herein are exemplary "five-point" seatbelt fasteners, i.e., the fastener system can fasten two waist straps, two shoulder straps and a crotch strap. However, the features and advantages described herein may also be applicable for other types of fastener systems, such as "three-point" fasteners (i.e., including two waist straps and a crotch strap).

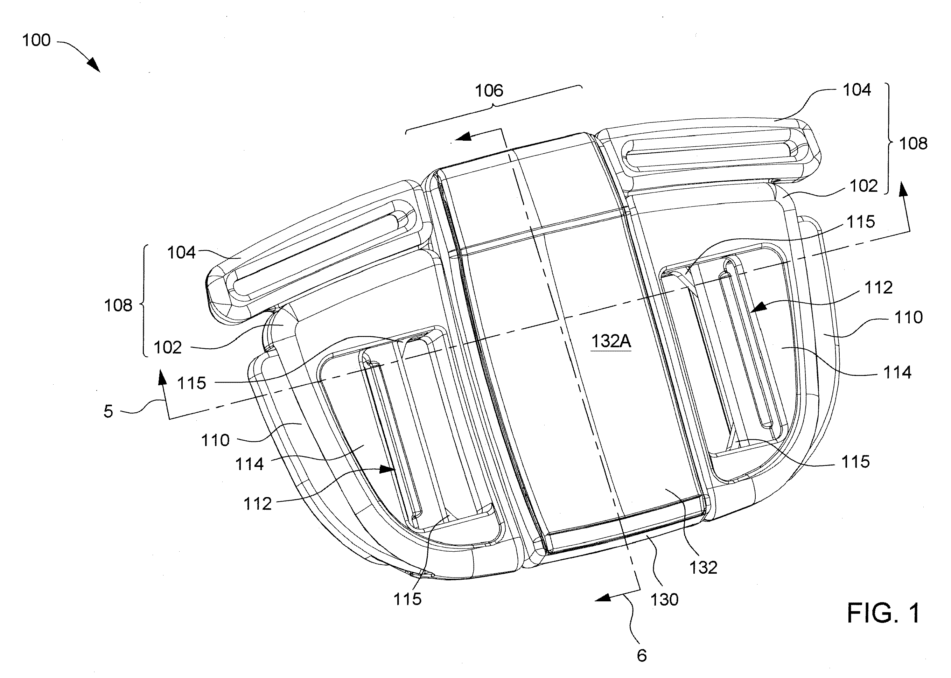

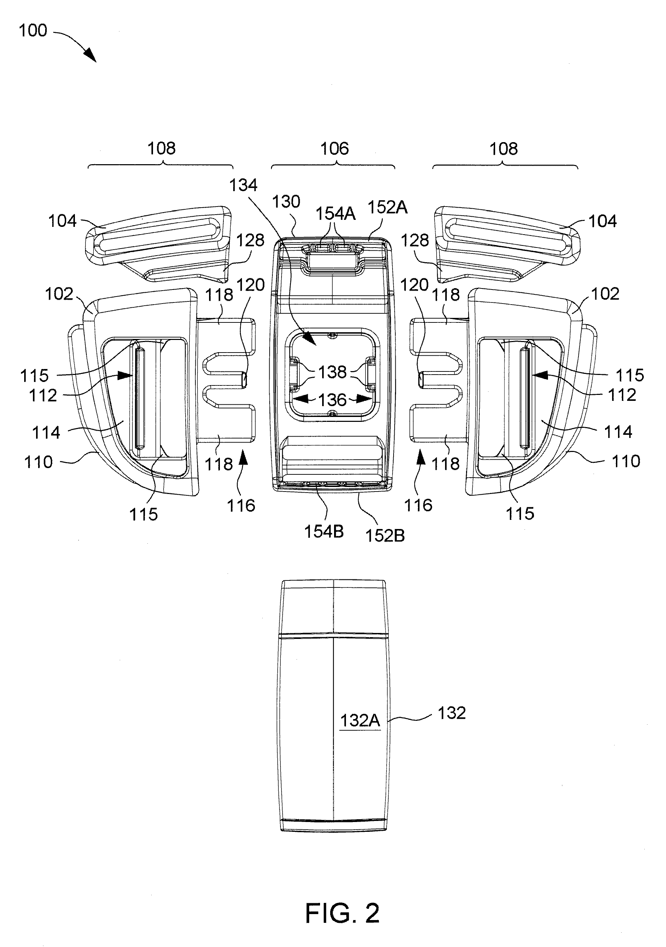

Figures 1 and 2 are respectively perspective and exploded views illustrating one embodiment of a seatbelt fastener system 100. The fastener system 100 can include two first fasteners 102, two second fasteners 104, and a socket 106. Each of the first fasteners 102 can be secured with a waist strap. Each of the second fasteners 104 can have a slot through an end of a shoulder strap can be wrapped and securely held. The socket 106 can be secured with an end of a crotch strap. For attaching the fastener system 100, the first fasteners 102 and the second fasteners 104 are respectively assembled with each other to form a plug assembly 108, which can be then buckled with the socket 106 to fasten all the straps together.

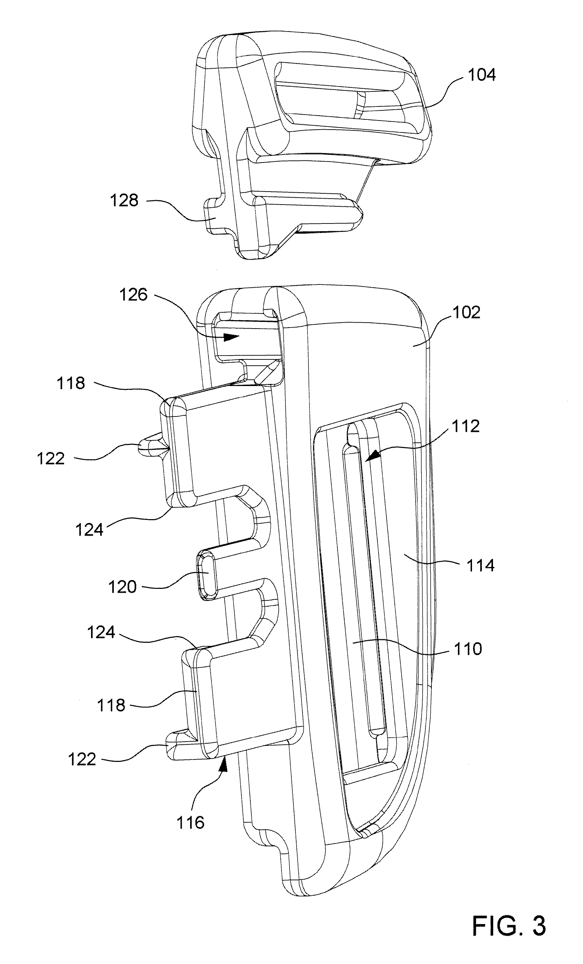

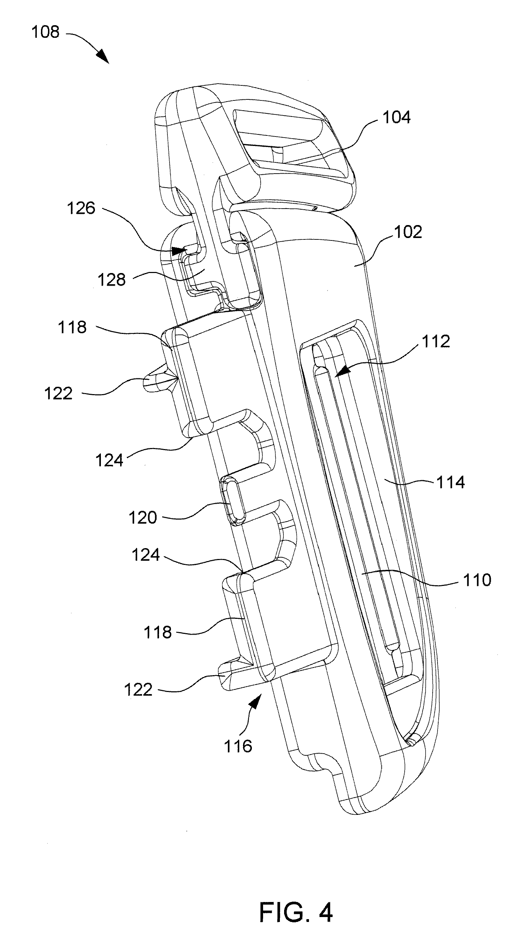

Figures 3 and 4 are schematic views illustrating the construction and assembly of the first fastener 102 and the second fastener 104. A side of the first fastener 102 can include a movable adjustment plate 110 assembled through an interior of the first fastener 102. The adjustment plate 110 can include an opening 112 through which the waist strap can be wrapped. The adjustment plate 110 can slide relative to the first fastener 102 such that the opening 112 can be partially covered with a flange 114 of the first fastener 102, thereby modifying the exposed area of the opening 112. When no pressure is applied on the adjustment plate 110, a resilient member 115 protruding from the first fastener 102 can bias the adjustment plate 110 to a position that can clamp a portion of the waist strap between a side edge of the opening 112 and the flange 114. When the adjustment plate 110 is pressed inward, a distance between the side edge of the opening 112 and the flange is increased so as to permit the waist strap to slip relative to the first fastener 102, whereby the waist strap can be adjusted to a suitable length.

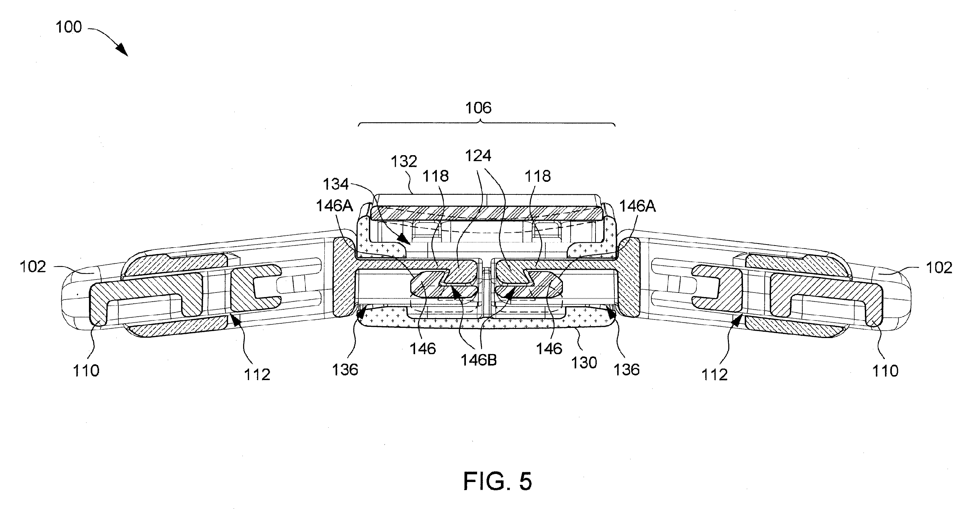

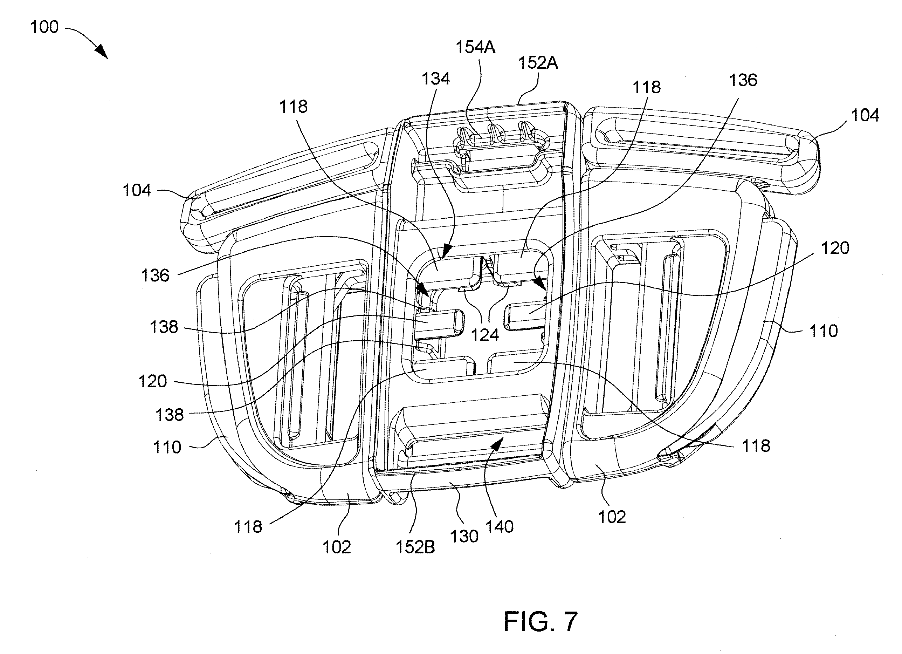

A side of the first fastener 102 opposite to the adjustment plate 110 can include a tongue 116. When the first fastener 102 is attached with the socket 106, the tongue 116 can be inserted into the socket 106 to snap and engage with a catch 146 (better shown in Figure 5) provided in the socket 106. As shown in Figures 2 and 4, the tongue 116 in this embodiment can have a trident-like shape, including two latch prongs 118, and an ejector prong 120 located between and shorter than the two latch prongs 118. Each of the latch prongs 118 can have a first side and a second side, the first side being provided with a protruding guide rib 122 and an engaging claw 124 (better shown in Figures 5 and 7).

An upper end portion of the first fastener 102 can include a first fitting portion 126 that is formed as a L-shaped slot. A lower end portion of the second fastener 104 can include a second fitting portion 128 that is formed as a L-shaped protrusion. The second fitting portion 128 can project from one outer side of the slot of the second fastener 104 and mate with the first fitting portion 126. As shown in Figure 4, the first and second fitting portions 126 and 128 can be complementarily nested into each other to assemble the first fastener 102 with the second fastener 104 and form the plug assembly 108. It is understood that alternate embodiments may also form the first fitting portion 126 as a protrusion, and the second fitting portion 128 as a slot that can be likewise engaged with the first fitting portion 126 to form the plug assembly.

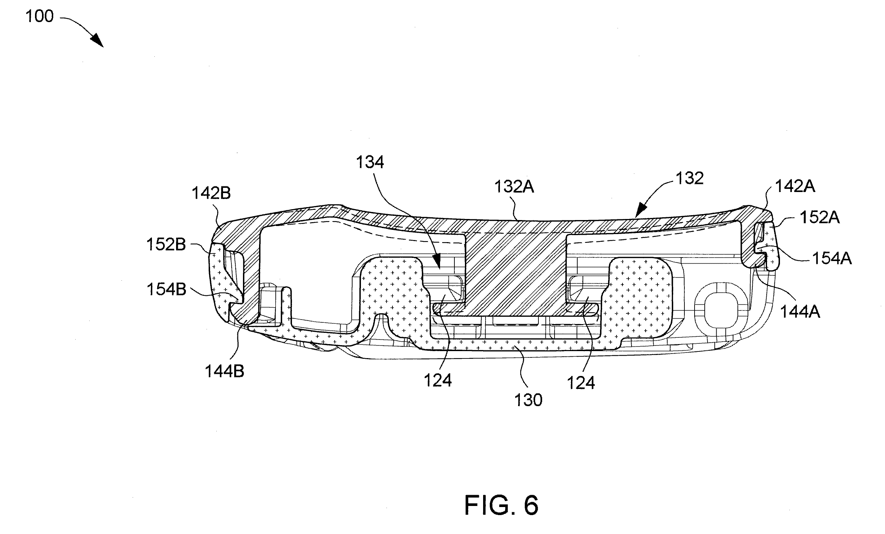

Figures 5 and 6 are cross-sectional views of the fastener system 100 respectively taken along section lines 5-5 and 6-6 of Figure 1, whereas Figure 7 is a schematic view illustrating the plug assembly 108 and a portion of the socket 106. As shown, the socket 106 can include a housing 130 and a release button 132 (the representation of the release button 132 is omitted in Figure 7). The housing 130 can have a central region provided with an opening 134, and left and right sides symmetrically provided with insert slots 136. The tongue 116 of each first fastener 102 can be respectively inserted through the associated insert slot 136 into the socket 106 to attach the fastener system 100.

As shown in Figure 7, an interior of the housing 130 can include a plurality of guide sidewalls 138 disposed in each of the insert slots 136. When the tongue 116 travels through the associated insert slot 136, the guide sidewalls 138 can interact with guide ribs 122 provided on the first fastener 102 to ensure that the first fastener 102 is correctly inserted into the socket 106. A peripheral portion of housing 130 between the two insert slots 136 can also include an opening 140 that may be divided into two opening portions by a transversal rod around which the crotch strap can be wrapped for its anchoring with the socket 106.

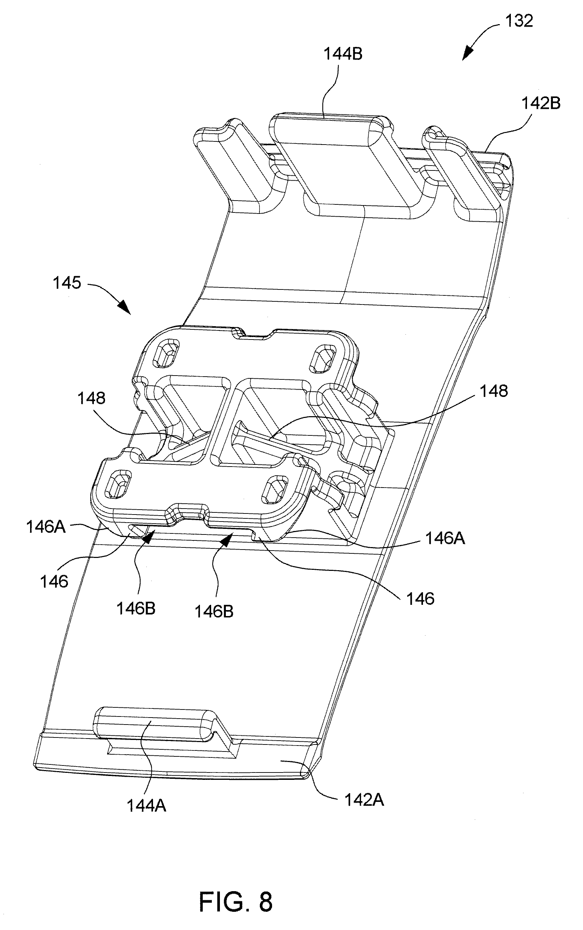

Figure 8 is a perspective view of the release button 132. In one embodiment, the release button 132 can be formed as an elongated plate shape, having a length approximately equal to a length of the housing 130. Moreover, the release button 132 can also include a resilient region 132A (better shown in Figure 1) that is located between two ends of the button 132 at a position corresponding to the opening 134 of the housing 130. The resilient region 132A can be formed from a material (for example plastics) that can elastically deform and recover its initial shape. Two longitudinally opposite ends of the release button 132 can be respectively provided with extended flanges 142A and 142B, and retainer lips 144A and 144B protruding inward from the flanges 142A and 142B.

An inner side of the resilient region 132A further includes a driving portion 145 of a generally rectangular shape that protrudes inward at a central position corresponding to the opening 134. The driving portion 145 can have two opposite sides facing the insert slots 136 that are respectively provided with retainer portions 146 associated with the latch prongs 118. In addition, the driving portion 145 also has push portions 148 located between the retainer portions 146 of a same side at a position corresponding to the ejector prong 120. In one embodiment, each of the retainer portions 146 can have a L-shape protruding from an inner side of the release button 132 (Figure 8 only shows the retainer portions 146 on a same side, the other side being also provided the same retainer portions 146). Each of the retainer portions 146 can have a proximal end facing the associated insert slot 136 that is provided with a beveled surface 146A, and a distal end adjacent to a recess 146B which thereby defines the engagement portion of the retainer finger 146A.

Each of the push portions 148 can be formed as a beveled surface provided on an inner side of the release button 132 that is facing the corresponding insert slot 136. The number of the retainer portions 146 is equal to the number of latch prongs 118 provided on the tongue 116, and the number of the push portions 148 is equal to the number of the ejector prongs 120 provided on the tongue 116. According to one embodiment, the release button 132, including the resilient region 132A, the flanges 142A and 142B, the retainer lips 144A and 144B, the retainer portions 146 and push portions 148 can be formed integral in a single body by plastic injection molding.

Referring to Figures 1, 5 and 6, when the release button 132 is assembled with the housing 130, the release button 132 can have a length that substantially covers an entire length of the housing 130 (including the opening 140). Moreover, the retainer portions 146 and the push portions 148 are disposed through the central opening 134 into the interior of the housing 130 so as to be oriented symmetrically toward their corresponding insert slots 136. For affixing the release button 132 with the housing 130, the flanges 142A and 142B of the release button 132 respectively abut against longitudinally opposite side edges 152A and 152B of the housing 130, and the retainer lips 144A and 144B respectively snap with the ribs 154A and 154B of the housing 130. At least two opposite edge portions of the release button 132 can be thereby secured with the housing 130. It is noted that the length of the release button 132 can be set to cover and conceal the opening 140, such that aesthetic appearance of the socket 106 can be improved.

Referring to Figures 5, 6 and 8, when the fastener system 100 is to be attached, each of the second fasteners 104 first has to be mounted with the associated first fastener 102 so as to form the plug assembly 108 shown in Figure 4. Then, the tongue 116 of the first fastener 102 can be engaged through the corresponding insert slot 136 into the socket 106. As the first fastener 102 travels through the interior of the socket 106, the beveled surfaces 146A of the retainer portions 146 can respectively contact and push against the latch prongs 118, which cause deformation of the latch prongs 118 and/or the retainer portions 146. When the engaging claws 124 of the latch prongs 118 reach the recesses 146B, the latch prongs 118 and/or retainer portions 146 can elastically recover their initial shapes, which engage the latch prongs 118 with the retainer portions 146. The first fastener 102 and socket 106 can be thereby locked together. In this locked state, the ejector prong 120 of the tongue 116 is facing one push portion 148 of the release button 132.

In case the user wants to detach the fastener system 100, pressure can be applied on the resilient region 132A of the release button 132. As a result, the resilient region 132A deforms and drives displacement of the retainer portions 146 and the push portions 148 (shown with phantom lines in Figures 5 and 6). The retainer portions 146 can then disengage from the latch prongs 118, and the push portions 148 can push against the ejector prongs 120 to eject the first fastener 102 out of the socket 106. Once the fastener system 100 is unbuckled and the external pressure on the release button 132 is released, the resilient region 132A can recover its initial shape and drive displacement of the retainer portions 146 and push portions 148 in a reverse direction to their initial positions.

It is worth noting that the resilient region 132A is the area of the release button 132 that can drive release displacement of the retainer portions 146 and push portions 148 in the most effective manner, which can cover an area approximately between the retainer lips 144A and 144B. In one embodiment, the resilient region 132A can be formed with a curved shape, which can increase its ability to deform and make it visually more distinctive.

With the aforementioned design, the release button of the socket 106 can have a relatively larger surface area that is more convenient to operate. By using the elastic displacement of the release button 132, the amount of component parts for making the socket 106 can be reduced, which shortens the assembly time and reduce manufacture cost.

It is noted that while the previous embodiment provides retainer portions that are integral with the release button, these features can also be implemented as separate parts. For example, the retainer portions can be movably assembled in the housing of the socket, and the resilient region can be operated to drive displacement of the retainer portions for releasing the first fastener from the socket.

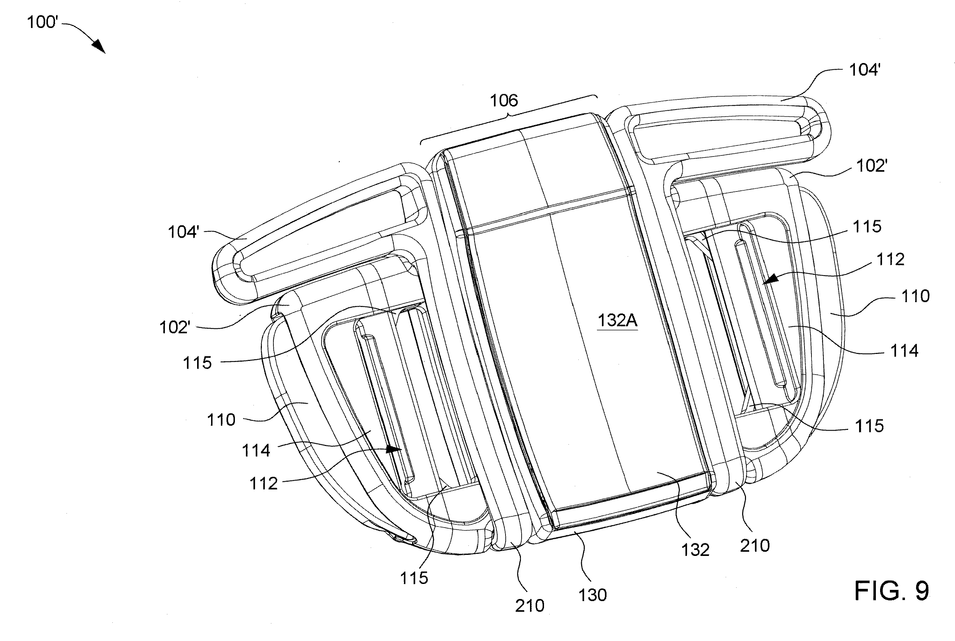

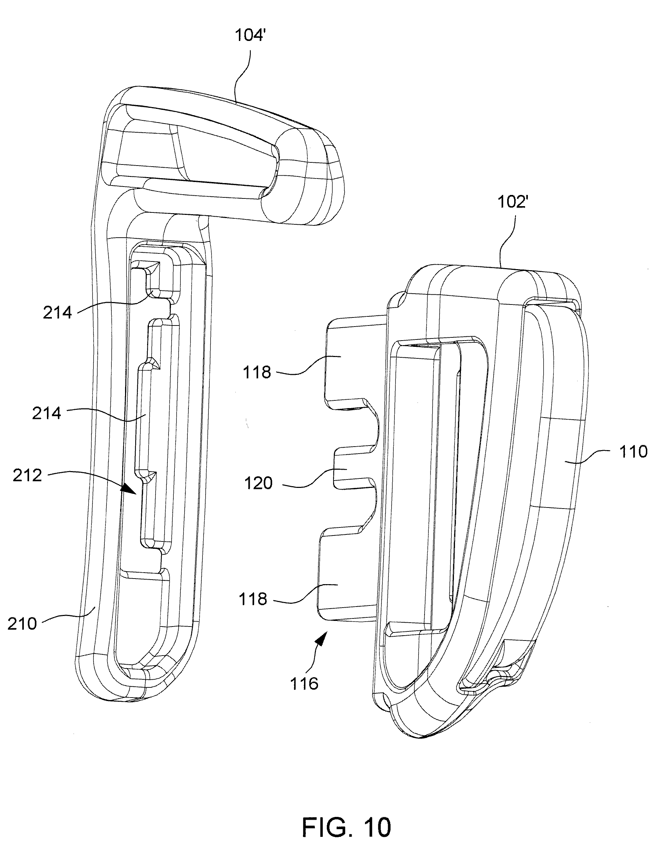

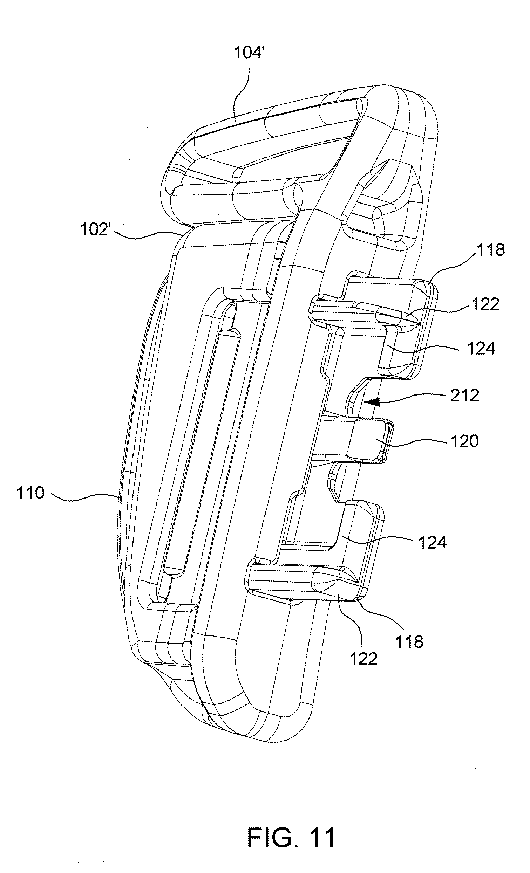

Figures 9, 10 and 11 are schematic views illustrating another embodiment of a seatbelt fastener system 100'. More specifically, Figure 9 is a perspective view of the fastener system 100', and Figures 10 and 11 are schematic views illustrating the construction and assembly of the first fastener 102' and the second fastener 104' of the fastener system 100'. The socket 106 and the first fastener 102' of the fastener system 100' can be assembled in a manner similar to the embodiment described previously. One main difference lies in the construction and assembly of the first fastener 102' and second fastener 104'. As shown in Figure 10, no first fitting portion 126 (as shown in Figure 3) is provided on the first fastener 102', whereas the second fitting portion of the second fastener 104' can be formed as a collar 210 extending downward from a side of the slot of the second fastener 104'. The collar 210 can include a hole 212 having an inner surface provided with a plurality of protruding guide ribs 214. When the first fastener 102' is assembled with the second fastener 104', the tongue 116 of the first fastener 102' can be passed through the collar 210, the guide ribs 214 being in contact with the tongue 116 to prevent its swaying displacement. Like previously described, once the first fastener 102' is assembled with the second fastener 104', the tongue 116 can be inserted into the socket 106 to buckle the fastener system 100'. In the locked state, the collar 210 of the second fastener 104' can be located adjacent to a longitudinal side edge of the socket 106.

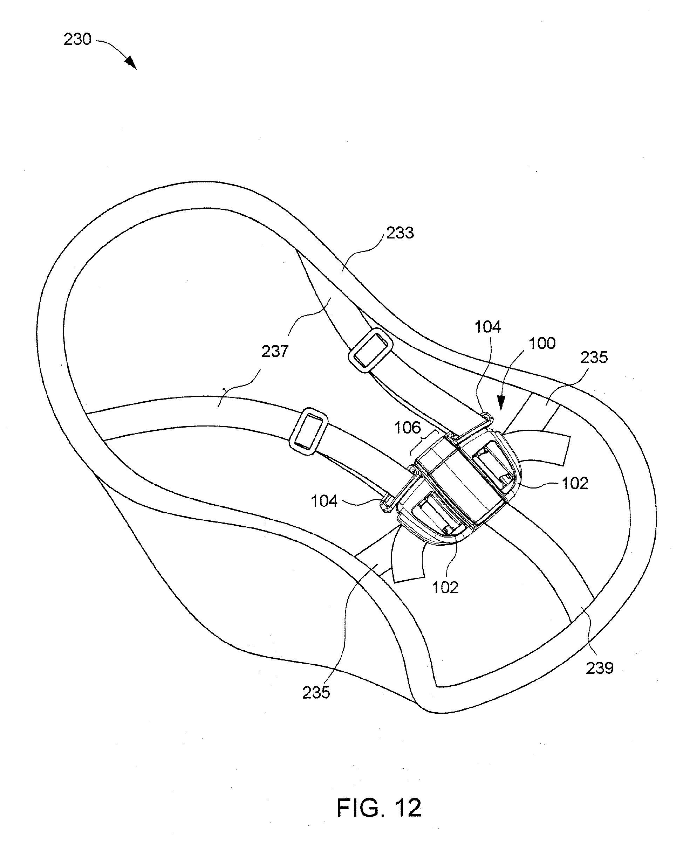

The fastener systems described herein can be suitable for use with any types of child carrier apparatus, such as strollers, safety seats, high chairs, and the like. Figure 12 is a schematic view illustrating the fastener system 100 used with a child carrier apparatus 230, which is exemplary a safety seat. The child carrier apparatus 230 can include a support body 233, two waist straps 235, two shoulder straps 237 and a crotch strap 239. Each of the waist straps 235 can have an end portion provided with the first fastener 102, the shoulder straps 237 can be respectively joined with the second fasteners 104, and the crotch strap 239 can be connected with the socket 106. While the embodiment of Figure 12 exemplary shows the fastener system 100, it will be understood that the fastener system 100' can be interchangeably used in combination with the child carrier apparatus 230.

Realizations in accordance with the present invention therefore have been described only in the context of particular embodiments.

## Claims

1. A seatbelt fastener system comprising:
a first fastener (102, 102') having a tongue (116); and
a socket (106), including a housing (130) and a release button (132), wherein the release button (132) is affixed with the housing (130) and has a resilient region (132A), and the socket (106) has an interior provided with a plurality of retainer portions (146);
wherein the tongue (116) of the first fastener (102, 102') is operable to insert into the socket (106) so that the retainer portions (146) engage and lock with the tongue (116), and upon application of an external pressure on the resilient region (132A), the resilient region (132A) of the release button (132) deforms and drives displacement of the retainer portions (146) such that the retainer portions (146) disengage and unlock from the tongue (116).

2. The fastener system according to claim 1, wherein the retainer portions (146) are formed integrally with the resilient region (132A), the retainer portions (146) protruding from an inner side of the release button (132) within the area of the resilient region (132A).

3. The fastener system according to claim 2, wherein the tongue (116) includes a plurality of latch prongs (118) adapted to engage with the retainer portions (146) to lock the first fastener (102, 102') with the socket (106).

4. The fastener system according to claim 3, wherein the latch prongs (118) respectively include engaging claw portions (124) adapted to snap and engage with the retainer portions (146) .

5. The fastener system according to claim 3, wherein the latch prongs (118) and the retainer portions (146) push against each other as the tongue (116) travels through the interior of the socket (106), causing deformation of the latch prongs (118) and/or the retainer portions (146).

6. The fastener system according to claim 1, wherein the tongue (116) further includes an ejector prong (120), and an inner side of the release button (132) includes a push portion (148) at a position adapted to interact with the ejector prong (120) when the tongue (116) is inserted in the socket (106).

7. The fastener system according to claim 6, wherein the push portion (148) is formed integral with the resilient region (132A).

8. The fastener system according to claim 7, wherein the deformation of the resilient region (132A) is adapted to cause the push portion (148) to push against the ejector prong (120) to eject the first fastener (102, 102') out of the socket (106) .

9. The fastener system according to claim 6, wherein the retainer portions (146) and the push portion (148) are formed integral with the resilient region (132A) of the release button (132).

10. The fastener system according to claim 9, wherein the deformation of the resilient region (132A) is adapted to drive displacement of the retainer portions (146) for disengaging from the tongue (116) and cause the push portion (148) to push against the ejector prong (120) to eject the first fastener (102, 102') out of the socket (106).

11. The fastener system according to claim 1, further comprising a second fastener (104, 104') adapted to assemble with the first fastener (102, 102'), wherein the first fastener (102, 102') is connected with a waist strap (235), the second fastener (104, 104') is connected with a shoulder strap (237), and the socket (106) is connected with a crotch strap (235).

12. The fastener system according to claim 11, wherein an upper side of the first fastener (102, 102') includes a first fitting portion (126), and a lower side of the second fastener (104, 104') includes a second fitting portion (128) adapted to mate with the first fitting portion (126) to assemble the first fastener (102, 102') with the second fastener (104, 104').

13. The fastener system according to claim 11, wherein the second fastener (104, 104') includes a collar (210) through which the tongue (116) is movably passed to assemble the first fastener (102, 102') with the second fastener (104, 104').

14. The fastener system according to any of claims 1 to 13, wherein the release button (132) has a length that substantially covers an entire length of the housing (130).

15. The fastener system according to any of claims 1 to 13, wherein the release button (132) is formed as an elongated plate shape.

16. The fastener system according to any of the claims 1 to 13, wherein the release button (132) has two longitudinally opposite ends provided with retainer lips (144A, 144B) for affixing the release button (132) with the housing (130), the resilient region (132A) being located between the two longitudinally opposite ends.

## Patentansprüche

1. Sitzgurt-Festmachsystem, umfassend:
einen ersten Befestiger (102, 102') mit einer Zunge (116); und ein Gurtschloss (106), enthaltend ein Gehäuse (130) und einen Löseknopf (132), wobei der Löseknopf (132) in dem Gehäuse (130) befestigt ist und einen federnden Bereich (132A) aufweist und das Gurtschloss (106) ein Inneres aufweist, in dem eine Vielzahl von Halteteilen (146) vorgesehen ist;
wobei die Zunge (116) des ersten Befestigers (102, 102') zu betätigen ist, sie in das Gurtschloss (106) zu stecken, sodass sich die Halteteile (146) mit der Zunge (116) koppeln und verriegeln und sich bei Ausüben eines äußeren Drucks auf den federnden Bereich (132A) der federnde Bereich (132A) des Löseknopfes (132) verformt und eine Verschiebung der Halteteile (146) antreibt, sodass sich die Halteteile (146) von der Zunge (116) entkoppeln und entriegeln.

2. Festmachsystem nach Anspruch 1, wobei die Halteteile (146) einstückig mit dem federnden Bereich (132A) ausgebildet sind, wobei die Halteteile (146) von einer Innenseite des Löseknopfes (132) innerhalb der Fläche des federnden Bereichs (132A) vorspringen.

3. Festmachsystem nach Anspruch 2, wobei die Zunge (116) eine Vielzahl von Verschlusszinken (118) enthält, geeignet, sich mit den Halteteilen (146) zu koppeln, um den ersten Befestiger (102, 102') mit dem Gurtschloss (106) zu verriegeln.

4. Festmachsystem nach Anspruch 3, wobei die Verschlusszinken (118) jeweils koppelnde Klauenbereiche (124) enthalten, geeignet, in die Halteteile (146) einzuschnappen und sich damit zu koppeln.

5. Festmachsystem nach Anspruch 3, wobei die Verschlusszinken (118) und die Halteteile (146) gegeneinander stoßen, wenn sich die Zunge (116) durch das Innere des Gurtschlosses (106) bewegt, und Verformung der Verschlusszinken (118) und/oder der Halteteile (146) bewirken.

6. Festmachsystem nach Anspruch 1, wobei die Zunge (116) weiter einen Auswerferzinken (120) enthält und eine Innenseite des Löseknopfes (132) einen Schiebebereich (148) an einer Stelle enthält, die geeignet ist, mit dem Auswerferzinken (120) zusammenzuwirken, wenn die Zunge in das Gurtschloss (106) gesteckt wird.

7. Festmachsystem nach Anspruch 6, wobei der Schiebebereich (148) einstückig mit dem federnden Bereich (132A) ausgebildet ist.

8. Festmachsystem nach Anspruch 7, wobei die Verformung des federnden Bereichs (132A) geeignet ist, den Schiebebereich (148) zu veranlassen, gegen den Auswerferzinken (120) zu drücken, um den ersten Befestiger (102, 102') aus dem Gurtschloss (106) zu werfen.

9. Festmachsystem nach Anspruch 6, wobei die Halteteile (146) und der Schiebebereich (148) einstückig mit dem federnden Bereich (132A) des Löseknopfes ausgebildet sind.

10. Festmachsystem nach Anspruch 9, wobei die Verformung des federnden Bereichs (132A) geeignet ist, eine Verschiebung der Halteteile (146) zum Entkoppeln von der Zunge (116) anzutreiben und den Schiebebereich (148) zu veranlassen, gegen den Auswerferzinken (120) zu drücken, um den ersten Befestiger (102, 102') aus dem Gurtschloss (106) zu werfen.

11. Festmachsystem nach Anspruch 1, weiter umfassend einen zweiten Befestiger (104, 104'), geeignet, mit dem ersten Befestiger (102, 102') zusammengebaut zu werden, wobei der erste Befestiger (102, 102') mit einem Beckengurt (235) verbunden ist, der zweite Befestiger (104, 104') mit einem Schultergurt (237) verbunden ist und das Gurtschloss (106) mit einem Schrittgurt (235) verbunden ist.

12. Festmachsystem nach Anspruch 11, wobei eine obere Seite des ersten Befestigers (102, 102') einen ersten Passbereich (126) enthält und eine untere Seite des zweiten Befestigers (104, 104') einen zweiten Passbereich (128) enthält, geeignet, mit dem ersten Passbereich (126) zusammenzupassen, um den ersten Befestiger (102, 102') mit dem zweiten Befestiger (104, 104') zusammenzubauen.

13. Festmachsystem nach Anspruch 11, wobei der zweite Befestiger (104, 104') einen Kragen (210) enthält, durch den die Zunge (116) beweglich hindurchgeführt wird, um den ersten Befestiger (102, 102') mit dem zweiten Befestiger (104, 104') zusammenzubauen.

14. Festmachsystem nach einem der Ansprüche 1 bis 13, wobei der Löseknopf (132) eine Länge aufweist, die im Wesentlichen eine gesamte Länge des Gehäuses (130) abdeckt.

15. Festmachsystem nach einem der Ansprüche 1 bis 13, wobei der Löseknopf (132) als eine längliche Plattenform ausgebildet ist.

16. Festmachsystem nach einem der Ansprüche 1 bis 13, wobei der Löseknopf (132) zwei längs entgegengesetzte Enden aufweist, an denen Haltelippen (144A, 144B) zum Befestigen des Löseknopfes (132) am Gehäuse (130) vorgesehen sind, wobei sich der federnde Bereich (132A) zwischen den beiden längs entgegengesetzten Enden befindet.

## Revendications

1. Système de serrage de ceinture de sécurité, comprenant :
un premier moyen de serrage (102, 102') possédant une languette (116) ; un socle (106), comportant un boîtier (130) et un bouton de déverrouillage (132), sachant que le bouton de déverrouillage (132) est agencé sur le boîtier (130) et possède une partie élastique (132A) et le socle (106) possède un intérieur doté d'une multitude de parties de retenue (146) ;
dans lequel la languette (116) du premier moyen de serrage (102, 102') est utilisable pour s'introduire dans le socle (106) de sorte que les parties de retenue (146) entrent en prise et se verrouillent avec la languette (116) et, sur application d'une pression externe sur la partie élastique (132A), la partie élastique (132A) du bouton de déverrouillage (132) déforme et entraîne le déplacement des parties de retenue (146) de sorte que les parties de retenue (146) se désengagent et se déverrouillent de la languette (116).

2. Système de serrage selon la revendication 1, dans lequel les parties de retenue (146) sont intégralement formées avec la partie élastique (132A), les parties de retenue (146) faisant saillie depuis une face intérieure du bouton de déverrouillage (132) au sein de la zone de la partie élastique (132A).

3. Système de serrage selon la revendication 2, dans lequel la languette (116) comprend une multitude de dents de verrou (118) adaptées pour s'engager dans les parties de retenue (146) pour verrouiller le premier moyen de serrage (102, 102') avec le socle (106).

4. Système de serrage selon la revendication 3, dans lequel les dents de verrou (118) comportent respectivement des parties en griffes (124) adaptées pour s'encliqueter et s'engager dans les parties de retenue (146).

5. Système de serrage selon la revendication 3, dans lequel les dents de verrou (118) et les parties de retenue (146) poussent réciproquement l'un contre l'autre lorsque la languette (116) coulisse à l'intérieur du socle (106), provoquant la déformation des dents de verrou (118) et/ou des parties de retenue (146).

6. Système de serrage selon la revendication 1, dans lequel la languette (116) comporte en outre une dent d'éjecteur (120) et une face intérieure du bouton de déverrouillage (132) comporte une partie de poussée (148) à une position adaptée pour interagir avec la dent d'éjecteur (120) lorsque la languette (116) est insérée dans le socle (106).

7. Système de serrage selon la revendication 6, dans lequel la partie de poussée (148) est intégralement formée avec la partie élastique (132A).

8. Système de serrage selon la revendication 7, dans lequel la déformation de la partie élastique (132A) est adaptée pour faire à ce que la partie de poussée (148) pousse contre la dent d'éjecteur (120) pour éjecter le premier moyen de serrage (102, 102') hors du socle (106).

9. Système de serrage selon la revendication 6, dans lequel les parties de retenue (146) et la partie de poussée (148) sont intégralement formées avec la partie élastique (132A) du bouton de déverrouillage (132).

10. Système de serrage selon la revendication 9, dans lequel la déformation de la partie élastique (132A) est adaptée pour entraîner le déplacement des parties de retenue (146) pour le désengagement depuis la languette (116) et faire à ce que la partie de poussée (148) pousse contre la dent d'éjecteur (120) pour éjecter le premier moyen de serrage (102, 102') hors du socle (106).

11. Système de serrage selon la revendication 1, comprenant en outre un second moyen de serrage (104, 104') adapté pour s'assembler avec le premier moyen de serrage (102, 102'), sachant que le premier moyen de serrage (102, 102') est connecté au moyen d'une sangle de taille (235), le second moyen de serrage (104, 104') est connecté au moyen d'une sangle d'épaule (237) et le socle (106) est connecté au moyen d'une sangle d'entre-jambes (235).

12. Système de serrage selon la revendication 11, dans lequel un côté supérieur du premier moyen de serrage (102, 102') comporte une première partie de connexion (126) et un côté inférieur du second moyen de serrage (104, 104') comporte une seconde partie de connexion (128) adaptée pour s'accoupler avec la première partie de connexion (126) pour assembler le premier moyen de serrage (102, 102') avec le second moyen de serrage (104, 104').

13. Système de serrage selon la revendication 11, dans lequel le second moyen de serrage (104, 104') comporte un collier (210) à travers lequel la languette (116) est guidée de manière mobile pour assembler le premier moyen de serrage (102, 102') avec le second moyen de serrage (104, 104').

14. Système de serrage selon l'une quelconque des revendications 1 à 13, dans lequel le bouton de déverrouillage (132) présente une longueur couvrant essentiellement une longueur entière du boîtier (130).

15. Système de serrage selon l'une quelconque des revendications 1 à 13, dans lequel le bouton de déverrouillage (132) est formé en tant que plaque allongée.

16. Système de serrage selon l'une quelconque des revendications 1 à 13, dans lequel le bouton de déverrouillage (132) présente deux extrémités opposées dans le sens longitudinal équipées de lèvres de retenue (144A, 144B) pour fixer le bouton de déverrouillage (132) sur le boîtier (130), la partie élastique (132A) étant disposée entre les deux extrémités opposées dans le sens longitudinal.
